# EUROPEAN PATENT APPLICATION

(11) **EP 3 970 531 A1**
(43) Date of publication of application: **23.03.2022**
(21) Application number: 20806523.5
(22) Date of filing: 15.05.2020
(51) Int. Cl.: A24F 40/46

(54) **NON-CONTACT E-CIGARETTE HEATER**

(30) Priority: 16.05.2019 CN 201920703370 U; 30.12.2019 CN 201922439531 U; 30.12.2019 CN 201911397002; 30.12.2019 CN 201922448707 U; 07.05.2020 CN 202020734040 U; 07.05.2020 CN 202020733034 U
(71) Applicant: Xiamen Fengtao Ceramics Co., Ltd, Xiamen, Fujian 361000 (CN)
(72) Inventor: ZHU, Xiaohua, Xiamen, Fujian 361000 (CN); XIONG, Zhaorong, Xiamen, Fujian 361000 (CN); FU, Zengxue, Xiamen, Fujian 361000 (CN); YU, Xiangyi, Xiamen, Fujian 361000 (CN); LIU, Maoqi, Xiamen, Fujian 361000 (CN)
(74) Representative: Ipey
(86) International application number: PCT/CN2020/090423
(87) International publication number: WO 2020/228805

(57) **Abstract**

The present invention discloses a non-contact heat not burn heating device which comprises a ceramic heating element, a smoking product bearing assembly and a sealing sleeve, wherein the ceramic heating element comprises a heating body and a heating circuit, the heating body is internally provided with a porous channel, and the heating circuit heats air passing through the porous channel; the smoking product bearing assembly comprises a preheating tube and a blocking piece, the blocking piece is arranged in a cavity defined by the preheating tube to divide the cavity into a first cavity and a second cavity, the first cavity is used for placing the part of the smoking product, and the second cavity is used for placing at least one part of the ceramic heating element; and the sealing sleeve is arranged in the hollow mode to form a bearing cavity, the ceramic heating element and the smoking product bearing assembly are arranged in the bearing cavity, the sealing sleeve is made of bushings to reduce the heat transmission of the ceramic heating element to the outside and reduce the outer wall temperature of the device, and the sealing sleeve is simple in structure and low in cost.

## Description

### Technical Field

The present invention relates to the technical field of heat not burn products, and in particular to a non-contact heat not burn heating device.

### Background Art

Smoking products such as cigarettes and cigars produce smoke by burning tobaccos during use, while the smoke produced by burning of the tobaccos contains many harmful substances, like tar, and inhalation of these harmful substances for a long term will cause great harm to the human body. With the progress of science and technology and continuous pursuit of a healthy life by people, a cigarette substitute, namely a heat not burn product, has emerged. Among them, a typical heat not burn scheme is to release effective substances in the smoking products in the heat-not-burn mode, like nicotine.

The heat not burn product mainly uses a working principle of low-temperature heating to heat the smoking products to about 300°C, thereby baking out effective ingredients like the nicotine in the smoking products. Because the burning temperature is not reached, the harmful substances like the tar in the smoking products are greatly reduced.

In the related art, the heat not burn product generally adopts a contact heating scheme to bake the smoking products, for example, a sword-shaped needle-shaped heating element is inserted into the smoking products for heating. However, the contact heating scheme has the shortcoming of uneven heating, that is, the part in direct contact with the heating element has a higher temperature, while the part far away from the heating element has rapid temperature decrease. Therefore, only the part of the tobacco close to the heating element can be completely baked, leading to the fact that the cut tobacco in the smoking products cannot be completely baked, and not only the cut tobacco is wasted, but also the smoke volume is wasted. If the baking efficiency is improved by increasing the temperature of the heating element, the cut tobacco around the heating element can be easily burnt, which not only affects the taste, but even leads to a large increase in the harmful ingredients and affects physical health.

### Detailed Description of the Invention

The present invention is made based on knowledge and research of the inventor on the following issues:
In the working process of a heat-not-burn product, due to the fact that the contact heating scheme has the shortcoming of uneven heating, the smoking products cannot be completely baked, and not only the cut tobacco is wasted greatly, but also the smoke volume is insufficient.

For this purpose, after a lot of research and experiments, the inventor finds that the smoking process itself is an air flow process. If the air flowing into the smoking products has the higher temperature, the hot air can play a direct role in baking the smoking products. Since the hot air can penetrate and bake all the tobacco of the smoking products with the smoking process, the problem of uneven heating can be effectively solved. Therefore, the smoking product is baked by heating the air and then using the hot air flow during the smoking process to achieve heating, and this scheme can achieve good overall heating effect.

The present invention aims to solve one of the technical problems in the above art at least to some extent. For this purpose, an objective of the present invention is to provide a non-contact heat not burn heating device, wherein at least one part of a ceramic heating element is arranged in a cavity defined by a preheating tube, which can achieve the effect of preheating the cavity, improves the heating efficiency and makes the heated flow air bake the smoking product evenly to avoid cut tobacco waste of the smoking product and improve the smoke volume. Meanwhile, at least one sealing cavity is formed in a sealing sleeve in the bushing sleeve mode and can reduce heat transmission of the ceramic heating element to the outside to reduce the outer wall temperature of the device.

To achieve the foregoing objective, an embodiment of the present invention provides a non-contact heat not burn heating device which comprises a ceramic heating element, a smoking product bearing assembly and a sealing sleeve, wherein the ceramic heating element comprises a heating body and a heating circuit, the heating body is cylindrical and internally provided with a porous channel, and the heating circuit is arranged on the heating body to heat air passing through the porous channel; the smoking product bearing assembly comprises a preheating tube and a blocking piece, the blocking piece is arranged in a cavity defined by the preheating tube to divide the cavity into a first cavity and a second cavity, wherein the first cavity is used for placing the part of the smoking product, and the second cavity is used for placing at least one part of the ceramic heating element; and the sealing sleeve is arranged in the hollow mode to form a bearing cavity, the ceramic heating element and the smoking product bearing assembly are arranged in the bearing cavity, and the sealing sleeve is made of bushings to reduce the heat transmission of the ceramic heating element to the outside.

According to the non-contact heat not burn heating device of the embodiment of the present invention, the ceramic heating element is matched with the smoking product bearing assembly, at least one part of the ceramic heating element is arranged in the cavity defined by the preheating tube, which can achieve the effect of preheating the cavity, improves the heating efficiency and makes the heated flow air bake the smoking product evenly to avoid cut tobacco waste of the smoking product and improve the smoke volume. Meanwhile, due to the fact that the ceramic heating element adopts the high-purity aluminum oxide ceramics which have high compactness and almost have no pores in the micro structure, pollutants in fluids cannot enter the ceramic heating element and thus cannot leave pollution or peculiar smell on the surface. Further, because the smoking product bearing assembly separates the smoking product from the ceramic heating element completely, non-contact air heating is completely achieved to ensure that the product is not polluted. In addition, the ceramic heating element adopts the porous arrangement, so that the specific surface area of the honeycomb ceramic body is large enough to achieve sufficient heating of the air. Not only the heating efficiency is high, but also the ceramic heating body has high thermal conductivity, so that the aim of heating the air can be achieved more quickly. Further, the air flow speed is limited to some extent due to the structure of the porous channel, the contact time between the hot air and the smoking product is longer during baking of the smoking product, the heat loss is reduced, and the energy is saved. Moreover, when no smoking action is performed, the hot air can be locked by means of the porous shape of the ceramic heating body, which reduces outer flow of the hot air and further saves the energy. In addition, the smoking product placed in the cavity is separated from the ceramic heating element through the blocking piece, which prevents the ceramic heating element from being in direct contact with the smoking product or being too close to the smoking product to further prevent the part of the smoking product close to the ceramic heating element from being heated to be over 320°C and burnt. Further, due to the fact that the preheating tube has the preheating effect, and at least one part of the ceramic heating element is arranged in the cavity, the hot air heated by the ceramic heating element bakes the smoking product effectively, the baking efficiency is high, and the smoke volume is further improved. Finally, at least one sealing cavity is formed in the sealing sleeve in the bushing sleeve mode and can reduce heat transmission of the ceramic heating element to the outside to reduce the outer wall temperature of the device.

Optionally, the sealing sleeve is made of vacuum bushings, the vacuum bushings are formed by sleeve connection of two layers of bushings, a sealing cavity is formed between the two layers of bushings in the sealing mode, and the sealing cavity adopts vacuum arrangement.

The sealing sleeve is made of the vacuum bushings, can reduce transmission of the heat produced by the ceramic heating element to the outside, achieve the heat insulation effect, effectively reduce the outer wall temperature of the device and greatly improve the user experience, is simple in structure and reduces cost.

Optionally, the sealing sleeve further comprises a radiating tube arranged on the outside of the vacuum bushings in the sleeve mode, and the vacuum bushings and the radiating tube are fixed in the point contact mode.

Optionally, the sealing sleeve is formed by adopting at least three bushings in the sleeve connection mode to form at least two sealing cavities, wherein, at least one sealing cavity is filled with a coolant, and at least one of the sealing cavities filled with the coolant is far away from the bearing cavity.

The sealing sleeve is formed by adopting at least three bushings in the sleeve connection mode to form at least two sealing cavities, at least one sealing cavity is filled with the coolant, and at least one of the sealing cavities filled with the coolant is far away from the bearing cavity. By means of the heat storage and cooling effect of the coolant, the outer wall temperature of the device can be effectively reduced, and the user experience is greatly improved.

Optionally, the two sealing cavities are provided, among the two sealing cavities, one sealing cavity close to the outside is filled with the coolant, and the other sealing cavity close to the inside is arranged in the vacuum mode.

Optionally, the two sealing cavities are provided, and the two sealing cavities are both filled with the coolant.

Further, at least three bushings are in coaxial sleeve connection.

Specifically, the coolant is water.

Optionally, the blocking piece is a flow deflector located in the cavity along the wall of the preheating tube, and the flow deflector is provided with a plurality of deflector holes.

Wherein, the plurality of deflector holes are evenly distributed in the peripheral direction.

Optionally, the blocking piece forms a step surface extending along the wall of the preheating tube to the center.

Optionally, the heating body is a cylinder, and the porous channel is arranged in the heating body in the axial direction.

Optionally, the preheating tube is a ceramic tube.

When the preheating tube adopts the ceramic tube, due to the fact that the ceramic tube has high surface compactness, adsorption of the smoke particles can be effectively prevented, and the effect of preventing peculiar smell can be further achieved.

Further, the heating body and the ceramic tube are both made of aluminum oxide ceramics, aluminum nitride ceramics, silicon nitride ceramics, silicon carbide ceramics, beryllium oxide ceramics or zirconium oxide ceramics.

Specifically, the aluminum oxide content in the aluminum oxide ceramics is greater than 99%, and the density of the aluminum oxide ceramics is not less than 3.86g/cm³.

To achieve the foregoing objective, another embodiment of the present invention provides a non-contact heat not burn heating device which comprises a ceramic heating element, wherein the ceramic heating element comprises a heating body and a heating circuit, the heating body is cylindrical and internally provided with a porous channel, and the heating circuit is arranged on the heating body to heat air passing through the porous channel; a smoking product bearing assembly which comprises a ceramic tube and a blocking piece, a cavity defined by the ceramic tube is suitable for placing the smoking product, and the blocking piece is connected to the ceramic tube and adjacent to the ceramic heating element to limit the position of the smoking product; and a sealing sleeve, wherein the sealing sleeve is arranged in the hollow mode to form a bearing cavity, the ceramic heating element and the smoking product bearing assembly are arranged in the bearing cavity, and the sealing sleeve is made of bushings to reduce the heat transmission of the ceramic heating element to the outside.

According to the non-contact heat not burn heating device of the embodiment of the present invention, the ceramic heating element and the smoking product bearing assembly are separated in the sealing sleeve, so that the heated flow air can bake the smoking product evenly when the ceramic heating element heats the air, which avoids cut tobacco waste of the smoking product and improves the smoke volume. Meanwhile, due to the fact that the ceramic heating element adopts the high-purity aluminum oxide ceramics which have high compactness and almost have no pores in the micro structure, pollutants in fluids cannot enter the ceramic heating element and thus cannot leave pollution or peculiar smell on the surface. Further, because the smoking product bearing assembly separates the smoking product from the ceramic heating element completely, non-contact air heating is completely achieved to ensure that the product is not polluted. In addition, the ceramic heating element adopts the porous arrangement, so that the specific surface area of the honeycomb ceramic body is large enough to achieve sufficient heating of the air. Not only the heating efficiency is high, but also the ceramic heating body has high thermal conductivity, so that the aim of heating the air can be achieved more quickly. Further, the air flow speed is limited to some extent due to the structure of the porous channel, the contact time between the hot air and the smoking product is longer during baking of the smoking product, the heat loss is reduced, and the energy is saved. Moreover, when no smoking action is performed, the hot air can be locked by means of the porous shape of the ceramic heating body, which reduces outer flow of the hot air and further saves the energy. Furthermore, in the smoking product bearing assembly, the cavity defined by the ceramic tube is used for placing at least a part of the smoking product, and the blocking piece is used for separating the smoking product placed in the cavity from the ceramic heating element, which prevents the ceramic heating element from being in direct contact with the smoking product or being too close to the smoking product to further effectively prevent the part of the smoking product close to the ceramic heating element from being heated to be over 320°C and burnt. Further, when a user smokes the smoking product, the hot air flows into the cavity quickly to bake the smoking product evenly and quickly to ensure that the hot air heated by the ceramic heating element bakes the smoking product effectively, the baking efficiency is high, and the smoke volume is sufficient. Due to the fact that the ceramic tube has high surface compactness, adsorption of the smoke particles can be effectively prevented, and the effect of preventing peculiar smell can be achieved. Finally, at least one sealing cavity is formed in the sealing sleeve in the bushing sleeve mode and can reduce heat transmission of the ceramic heating element to the outside to reduce the outer wall temperature of the device.

Optionally, the blocking piece is a flow deflector located on an opening at one end of the ceramic tube and forming a cup body with the ceramic tube, and the flow deflector is provided with a plurality of deflector holes.

Optionally, the blocking piece forms a step surface extending along the wall of the ceramic tube to the center.

Optionally, the sealing sleeve is made of vacuum bushings, the vacuum bushings are formed by sleeve connection of two layers of bushings, a sealing cavity is formed between the two layers of bushings in the sealing mode, and the sealing cavity adopts vacuum arrangement.

The sealing sleeve is made of the vacuum bushings, can reduce transmission of the heat produced by the ceramic heating element to the outside, achieve the heat insulation effect, effectively reduce the outer wall temperature of the device and greatly improve the user experience, is simple in structure and reduces cost.

Optionally, the sealing sleeve further comprises a radiating tube arranged on the outside of the vacuum bushings in the sleeve mode, and the vacuum bushings and the radiating tube are fixed in the point contact mode.

Optionally, the sealing sleeve is formed by adopting at least three bushings in the sleeve connection mode to form at least two sealing cavities, wherein, at least one sealing cavity is filled with a coolant, and at least one of the sealing cavities filled with the coolant is far away from the bearing cavity.

The sealing sleeve is formed by adopting at least three bushings in the sleeve connection mode to form at least two sealing cavities, at least one sealing cavity is filled with the coolant, and at least one of the sealing cavities filled with the coolant is far away from the bearing cavity. By means of the heat storage and cooling effect of the coolant, the outer wall temperature of the device can be effectively reduced, and the user experience is greatly improved.

Optionally, the two sealing cavities are provided, among the two sealing cavities, one sealing cavity close to the outside is filled with the coolant, and the other sealing cavity close to the inside is arranged in the vacuum mode.

Optionally, the two sealing cavities are provided, and the two sealing cavities are both filled with the coolant.

In addition, the embodiment of the present invention further provides a non-contact air heating type heat not burn heating device which comprises a heating assembly, a sealing sleeve and a heat recovery device, wherein the side wall of the heat recovery device is internally provided with a first cellular porous channel, and the first cellular porous channel divides the heat recovery device into an outer wall and an inner wall; the inner wall of the heat recovery device is provided with the sealing sleeve, the sealing sleeve is internally provided with the heating assembly in the sleeve mode, and the heating assembly is connected to the heat recovery device through the sealing sleeve; the heating assembly is internally provided with a heating body; and the heating body is provided with a heating circuit, the endpoints of the heating circuit are provided with wires, and the heating body is internally provided with a second cellular porous channel.

Further, the heating assembly is provided with a preheating tube, a flow deflector and a heating element sequentially from top to bottom, wherein the flow deflector is provided with a plurality of deflector holes.

Further, the heating assembly and the heat recovery device are both made of the high-purity aluminum oxide ceramics with the density not less than 3.86g/cm³.

Further, the first cellular porous channel and the second cellular porous channel are provided with square holes or other polygonal holes evenly distributed, the hole diameter range is 0.1-2mm, and the minimum distance between two adjacent holes is 0.1-0.5mm.

Further, printing materials of the heating circuit comprise but not limited to silver, tungsten and MoMn (molybdenum manganese).

Further, materials of the wires comprise but not limited to silver, copper and nickel.

The non-contact air heating type heat not burn heating device of the embodiment of the present invention heats the air through the heating assembly to make the heated flow air bake the tobacco evenly and improve the smoke volume. Meanwhile, due to the fact that the heating assembly and the heat recovery device both adopt the high-purity aluminum oxide ceramics which have high compactness and almost have no pores in the micro structure, the pollutants in the fluids cannot enter the ceramics and cannot leave pollution or peculiar smell on the surface. Further, due to the air heating mode, no contact with a cartridge ensures that the device is not polluted.

### Description of the Attached Drawings

FIG. 1 is a structure diagram of a non-contact air heating type heat not burn heating device of embodiment of the present invention;
FIG. 2 is a schematic diagram of a ceramic heating element of an embodiment of the present invention;
FIG. 3 is a schematic diagram of a flow deflector of an embodiment of the present invention;
FIG. 4 is a schematic diagram of a heat recovery device of an embodiment of the present invention;
FIG. 5 is a structure diagram of a smoking product bearing assembly of an embodiment of the present invention;
FIG. 6 is a structure diagram of a non-contact heat not burn heating device of an embodiment of the present invention;
FIG. 7 is a structure diagram of a non-contact air heating type heat not burn heating device of another embodiment of the present invention;
FIG. 8 is a cross-section schematic diagram of a sealing sleeve of an embodiment of the present invention;
FIG. 9 is a cross-section schematic diagram of a sealing sleeve of another embodiment of the present invention;
FIG. 10 is a structure diagram of a smoking product bearing assembly of another embodiment of the present invention;
FIG. 11 is a structure diagram of a smoking product bearing assembly of another embodiment of the present invention;
FIG. 12 is a structure diagram of a non-contact heat not burn heating device of another embodiment of the present invention;
FIG. 13 is a structure diagram of a non-contact heat not burn heating device of still another embodiment of the present invention;
FIG. 14 is a cross-section schematic diagram of a sealing sleeve of yet another embodiment of the present invention;
FIG. 15 is a cross-section schematic diagram of a sealing sleeve of still another embodiment of the present invention; and
FIG. 16 is a structure diagram of a non-contact heat not burn heating device of yet another embodiment of the present invention.

### Detailed Description of Embodiments

The embodiments of the invention will be described in detail below, examples of the embodiments are shown in drawings, wherein same or similar mark numbers indicate identical or similar components or components having same or similar functions. The embodiments described with reference to the drawings below are illustrative and intended to explain the present invention and cannot be construed as limiting the present invention.

In order to better understand the above technical scheme, the illustrative embodiments of the present invention are described in more detail with reference to the drawings below. Although the drawings show the illustrative embodiments of the present invention, it should be understood that the present invention can be achieved in various forms without being limited by the embodiments illustrated. On the contrary, these embodiments are provided to understand the present invention more thoroughly, and can convey the scope of the present invention to those skilled in the art completely.

In order to better understand the above technical scheme, the above technical scheme will be described in detail in combination with the specification drawings and the specific embodiments below.

First, after a lot of research and experiments, the inventor of the present invention finds that the heating scheme of heating the air and utilizing the hot air to bake the smoking product in the smoking process is better in heating effect on the whole.

However, when the air heating scheme is adopted, first it is necessary to select a suitable heating element to heat the air, and when the heating element heats the air, room temperature air needs to enter the heating element, and the temperature of air should reach 300°C or above after flowing out of the heating element; second, some general smoking habits have to be considered, that is, about 20ml per second must be ensured during temperature rise, and each puff lasts for about 3 seconds, and the heating element needs a total heating efficiency of about 60ml air.

To achieve the above effect, the inventor has learned through a lot of experiments that when a heating wire is used to heat the air, the heating wire should have high temperature, and only when the temperature of the heating wire is up to 600°C or above, it can heat the air flowing through to more than 300°C, and the heating wire will cool quickly as long as air flows by, in this way, each puff of smoking will make the temperature of the heating wire drop by 200-300°C. Therefore, the heating wire needs power compensation during smoking, otherwise it may be difficult to guarantee air heating required for smoking; while, power compensation is performed for the heating wire based on the air flow detected by an air flow sensor, due to small contact area between heating wire and air, this power compensation scheme not only needs high power to achieve the required heating effect, but also has the problem of inaccurate gas temperature after heating, untimely compensation response, which may cause uneven temperature in all directions.

In addition, when the flow air is heated to above 300°C by increasing the temperature of a heater strip, metal ions separated from the heater strip may be mixed into the smoking airflow and enter the human body to do harm to the body health due to temperature increase of the heater strip and direct contact of the heater strip with the air.

For the above, the inventor of the present invention has concluded through a lot of research that when air heating is used to bake a smoking product, the heating element used to heat the air needs to have a large heating area so as to reduce the temperature difference between the heating element and the air; the heating element also needs high heat capacity to resist against the temperature drop caused after the smoking airflow passes, and high thermal conductivity to reduce the heating preparation time.

For this purpose, based on deep research on ceramics for many years, an applicant finds that the larger heating surface area can be achieved by designing the porous structure of honeycomb ceramics to make the heating element achieve very high air heating efficiency. Meanwhile, the honeycomb ceramic heating element of the porous structure is closer to a solid structure and has higher heat capacity than the ceramic tube in the same size. In addition, the aluminum oxide material has the thermal conductivity of more than 30W/MK, so that the heat can be transmitted more quickly and evenly, and high thermal conductivity can be achieved. Accordingly, the honeycomb ceramic heating element of the porous structure can meet the requirement for baking the smoking product in the air heating mode, and the non-contact heat not burn heating device is further formed based on the honeycomb ceramic heating element of the porous structure.

A non-contact heat not burn heating device of the embodiment of the present invention is described below with reference to the drawings.

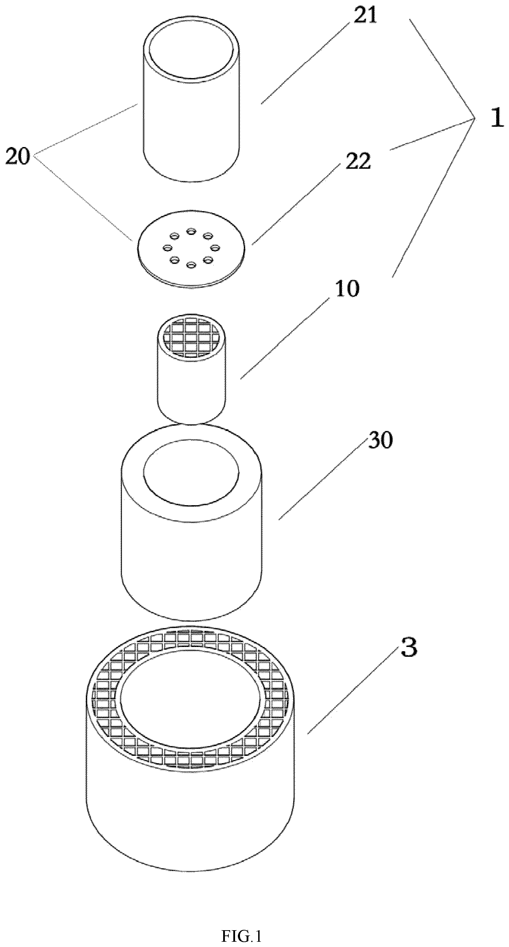

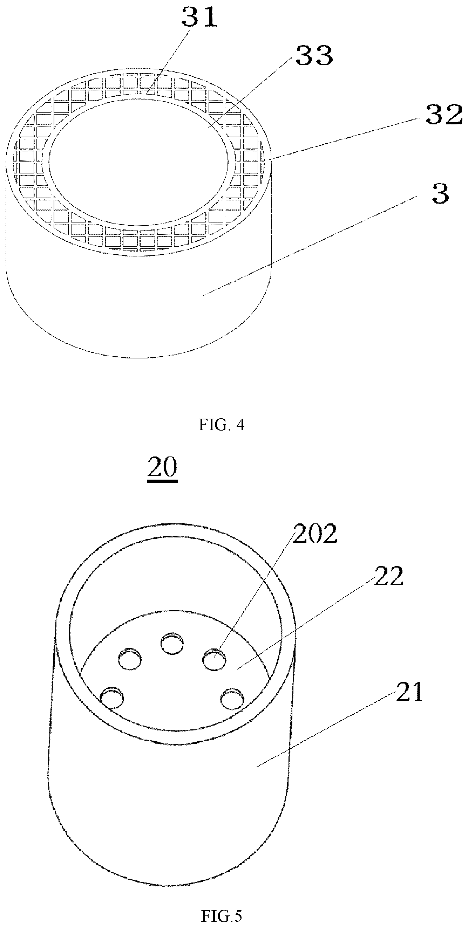

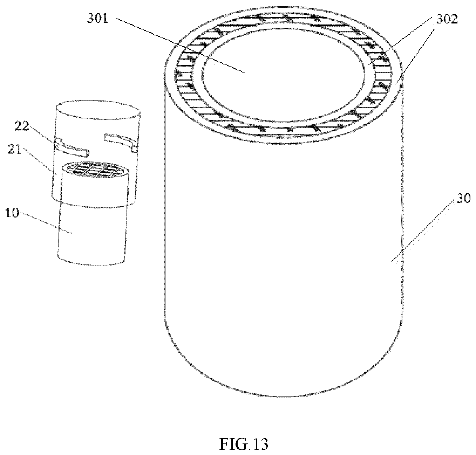

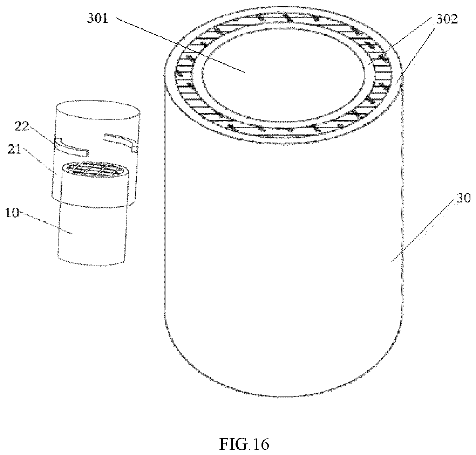

As shown in FIG. 1 to FIG. 16, the non-contact heat not burn heating device provided by the embodiment of the present invention comprises a ceramic heating element 10, a smoking product bearing assembly 20 and a sealing sleeve 30.

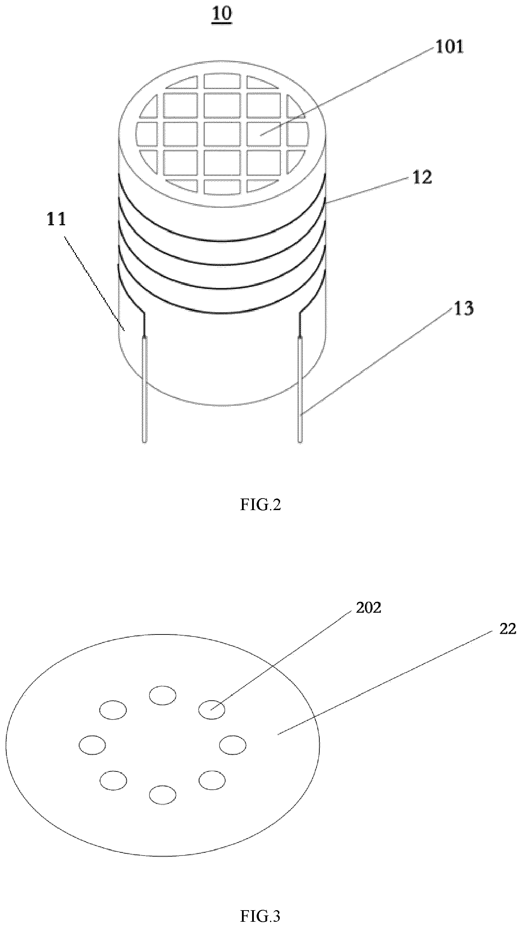

Further, as shown in FIG. 1 and FIG. 2, the ceramic heating element 10 comprises a heating body 11 and a heating circuit 12.

Wherein, the heating body 11 is cylindrical, and the heating body 11 is internally provided with a porous channel 101; and the heating circuit 12 is arranged on the heating body 11 to heat air passing through the porous channel 101.

That is, the heating circuit 12 performs heating work after powered on to heat the air passing through the porous channel 101 to achieve the function of even heating of the air.

Optionally, the heating body 11 can be cylindrical and can also be in the shape of a polygonal cylinder, such as in the shape of a prism, a square column, a pentagonal column, etc. This is not specifically limited in the present invention.

In an embodiment, as shown in FIG. 2, the heating body 11 is a cylinder, and the porous channel 101 is arranged in the heating body 11 in the axial direction.

In addition, as shown in FIG. 2, the heating circuit 12 is printed on the outer surface of the heating body 11 in the thick film circuit mode. For example, the heating circuit encircles the outer surface of the heating body 11 in the heating coil mode and is integrated with the heating body 11.

According to an embodiment of the present invention, printing materials of the heating circuit 12 comprise silver, tungsten or molybdenum manganese.

Specifically, the outer wall of the cylindrical cellular ceramic heating body is printed with the heating silver paste thick film heating circuit for heating. Due to the fact that the ceramic heating body 11 adopts the porous cellular structure, the heating surface area of the heating element can be greatly increased. According to experiments, the user only needs to heat the heating body 11 to about 380°C to heat the air to above 300°C. Because the ceramic heating body 11 has higher heat capacity, after each smoking airflow (for example, 50ml air) passes through the ceramic heating element, temperature decrease is small, only 20-30°C.

When the heating circuit 12 is printed on the outer surface of the heating body 11 in the thick film circuit mode, its heating resistor is generally a PTC thermistor, that is, the resistance increases when the temperature rises. According to multiple temperature increase and decrease experiments, the temperature of the ceramic heating element corresponds to the resistance, so that the temperature of the ceramic heating element can be represented by measuring the resistance. Thus the temperature of the heating element can be pulled back to the original temperature within several seconds by utilizing the self-compensation effect (the heating element is cooled, the resistance decreases, the current increases, and the power increases) of the thick film heating circuit under constant voltage supply of a DC power supply, and the temperature of the heating element can be kept stable without fluctuations when there is no airflow.

Therefore, in the embodiment of the present invention, due to the cellular structure of the heating body 11, the ceramic heating element can provide sufficient heat capacity, so that the temperature effect of the airflow on the heating element is very small in the simulated smoking process, no power compensation is required, and the effect of the heating air for cigarette smoking can be achieved by self-regulation.

In addition, the heating circuit 12 printed on the heating body 11 in the thick film circuit mode has a clear temperature-sensitive effect. The resistance increases with increase of the temperature and decreases with decrease of the temperature, the heating circuit can be used as a sensor, so no temperature sensor is required to control the temperature of the heating element.

To sum up, the ceramic heating element of the embodiment of the present invention does not need to perform dynamic power compensation based on an airflow sensor, nor does it need to detect or control the temperature based on a temperature sensor, which not only simplifies the complexity of a control system, but also achieves a better control response effect.

Optionally, according to an embodiment of the present invention, through holes of the porous channel 101 are round holes or polygonal holes.

In addition, in an embodiment, the through holes of the porous channel 101 are regularly distributed in the heating body 11, for example, as shown in FIG. 2.

Optionally, when the heating body 11 is a cylinder, the through holes of the porous channel 101 can be evenly distributed in the peripheral direction. Or, as shown in FIG. 2, when the through holes of the porous channel 101 are polygonal holes, the through holes can be distributed in the cylinder in central symmetry.

Understandably, in the embodiment of the present invention, the distribution of the through holes of the porous channel 101 may not be limited, as long as the porous cellular structure of the heating body 11 is limited.

Specifically, in an embodiment of the present invention, the hole diameter of the through holes of the porous channel 101 is 0.1-2mm, for example, 0.5mm and 1mm; and the distance between two adjacent through holes is 0.1-0.5mm, for example, 0.2mm and 0.4mm. Understandably, the hole diameter of the through holes of the porous channel 101 and the distance between two adjacent through holes can be limited according to the specific circumstances of the heating body 11, as long as ventilation can be performed to increase the contact area between the air and the surface.

Optionally, according to an embodiment of the present invention, the heating body 11 is made of aluminum oxide ceramics, aluminum nitride ceramics, silicon nitride ceramics, silicon carbide ceramics, beryllium oxide ceramics or zirconium oxide ceramics.

Wherein, the aluminum oxide content in the aluminum oxide ceramics is greater than 99%, and the density of the aluminum oxide ceramics is not less than 3.86g/cm³.

Specifically, in an example, as shown in FIG. 2, the ceramic heating element comprises the cellular heating body 11 made of the aluminum oxide ceramics, the heating circuit 12 and wires 13. Wherein, the center of the cellular heating body 11 is provided with the porous channel 101, the porous channel 101 is provided with square holes evenly distributed, the heating circuit 12 is arranged on the outer surface of the heating body 11 in the encircling mode, and the head end and the tail end of the heating circuit 12 are provided with the wires 13.

In addition, the density of the aluminum oxide ceramics of the heating body 11 is 3.9g/m³, and the resistance of the heating body 11 can be 0.1-2Ω, for example, 0.6Ω and 0.8Ω; the hole diameter of the square holes of the porous channel 101 can be 1.5mm, that is, the side length of the square holes is 1.5mm; and the wall thickness of the porous channel 101 can be 0.2mm, as shown in FIG. 2, the distance between corresponding sides of two adjacent square holes is the wall thickness of the porous channel 101.

Further, the material of the heating circuit 12 can be silver. Wherein, the printing thickness of the heating circuit 2 is 0.01-0.02mm, the wires 13 can be silver wires, and the diameter is 0.2mm.

In the embodiment of the present invention, the purity of the aluminum oxide ceramics for making the heating body 11 is greater than 99%, that is, the ceramics are high-purity aluminum oxide ceramics, the cellular ceramic surface has very high compactness, adsorption of the smoke particles can be effectively prevented, and the effect of preventing peculiar smell can be achieved. The cellular heating body made of the high-purity aluminum oxide ceramics has good thermal conductivity, up to 33W/MK. The wall thickness and the hole diameter are both very small in the structure of the cellular ceramic heating element, and the heat conduction effect is extremely good. Meanwhile, the contact area with the air can be greatly increased by means of the cellular shape, so that the specific surface area of the honeycomb aluminum oxide ceramics is large, the heating efficiency is high, and the aim of heating the air can be achieved more quickly. In this way, the cellular ceramic heating element of the embodiment of the present invention is arranged under a smoking product to be baked and not in direct contact with the smoking product to be baked. When a user smokes the smoking product, the air flows through the through holes of the heating element honeycomb to be heated to the specific temperature, then the smoking product is quickly heated to about 320°C when the hot air flows through the smoking product, the heating area and the heating efficiency of the smoking product are greatly improved, the heating is more even, the cut tobacco is carbonized more completely, cut tobacco waste is avoided, the taste of the user is improved, the smoke volume is sufficient, and the effect is not limited by the variety of the smoking product. Further, the air flow speed is limited to some extent due to the structure of the porous honeycomb, the contact time between the hot air and the smoking product is longer, heat loss is reduced, and energy is saved. When there is no smoking action, the porous honeycomb ceramic can lock the hot air while reducing the outflow of hot air, which will further save energy.

To sum up, according to the ceramic heating element of the embodiment of the present invention, the heating body is internally provided with the porous channel, so that the contact area between the heating body and the air can be increased when the air passing through the porous channel is heated by the heating circuit, which makes the specific surface area of the honeycomb ceramic body large and achieves sufficient heating of the air. Not only the heating efficiency is high, but also the ceramic heating body has high thermal conductivity, so that the aim of heating the air can be achieved more quickly. Further, the air flow speed is limited to some extent due to the structure of the porous channel, the contact time between the hot air and a smoking product is longer during baking of the smoking product, heat loss is reduced, and energy is saved. Moreover, when no smoking action is performed, the hot air can be locked by means of the porous shape of the ceramic heating body, which reduces outer flow of the hot air and further saves the energy. In addition, due to the fact that the ceramic heating body has high surface compactness, adsorption of the smoke particles can be effectively prevented, and the effect of preventing peculiar smell can be achieved.

Based on deep research on the ceramic heating element and the smoking product bearing assembly, the inventor of the present invention finds that, in the smoking product of the current common heat-not-burn product, the carbonization temperature of cigarette paper wrapped outside is less than that of the cut tobacco inside; and when the temperature of the cigarette paper wrapped outside the smoking product exceeds 240°C, there will be burnt smell, while the cut tobacco inside needs to be baked at about 330°C to emit smoke effectively. This requires to achieve the effect that the tobacco paper is not over-baked when the cut tobacco is heated to the ideal temperature. Further, the inventor finds through experiments that better use experiences will be achieved during actual smoking if the entire smoking product has the ideal preparation temperature, like 200~220°C.

For this purpose, when the heat not burn heating device scheme where the smoking product is not in direct contact with the ceramic heating element is adopted, the smoking product bearing assembly is required to provide the preparation temperature of 200-220°C. Therefore, a bearing part for placing the smoking product, that is, a preheating tube, needs to have a preheating function. In order to prevent the smoking product from being in direct contact with the ceramic heating element, a blocking piece needs to be arranged at the bottom of the preheating tube or in the defined cavity to achieve the effect of position limiting. According to repeated experiments, the blocking piece can not only effectively separate the smoking product from the ceramic heating element, but also achieve the effect that tobacco tar precipitate generated during the smoking process of the smoking product will not condense on the ceramic heating element and the blocking piece, repeated smoking achieves the self-cleaning effect naturally, no peculiar smell is left, no frequent cleaning is required, and high use value can be achieved.

In terms of the heating effect, according to many experiments, the aluminum oxide ceramic tube can serve as a smoking product container, can not only effectively provide the ideal preparation temperature for the smoking product through the high thermal conductivity of the aluminum oxide material, but also achieve the effect that no tobacco tar residue is left due to compactness of the material of the aluminum oxide ceramic tube, and peculiar smell caused by continuous use is avoided.

In addition, in order to increase the heating rate, when the ceramic heating element is controlled to perform heating work, the non-contact heat not burn heating device of the embodiment of the present invention adopts the heating strategy of adopting high-power pulling up in the initial stage and maintaining the working temperature at low power after reaching the working temperature. Due to the temperature transfer process, the smoking product and the smoking product bearing assembly have not reached the corresponding temperature except for the ceramic heating element that has reached the working temperature. Therefore, while the ceramic heating element is controlled to maintain the working temperature by low-power heating, the voltage cannot be directly reduced to the voltage in the thermal insulation stage but needs to be slowly reduced.

Therefore, when the ceramic heating element is controlled to enter the thermal insulation stage, the voltage reduction process needs to be completed in multiple stages. For example, two-stage voltage reduction is required. In the first stage, the voltage is quickly reduced; in the second stage, the voltage needs to be slowly reduced to the corresponding voltage in the thermal insulation stage to enter the thermal insulation stage maintaining the working temperature. Because the power is much higher than the heat balance power in order to raise the temperature quickly in the early stage. If the voltage reduction is too slow, the temperature of the smoking product can exceed 330°C easily when the user smokes the smoking product continuously after the first smoking action, leading to scorching of the smoking product. Therefore, the control process of first reducing the voltage quickly and then reducing the voltage slowly can avoid the situation effectively.

Therefore, as shown in FIG. 1 to FIG. 16, the smoking product bearing assembly 20 comprises a preheating tube 21 and a blocking piece 22.

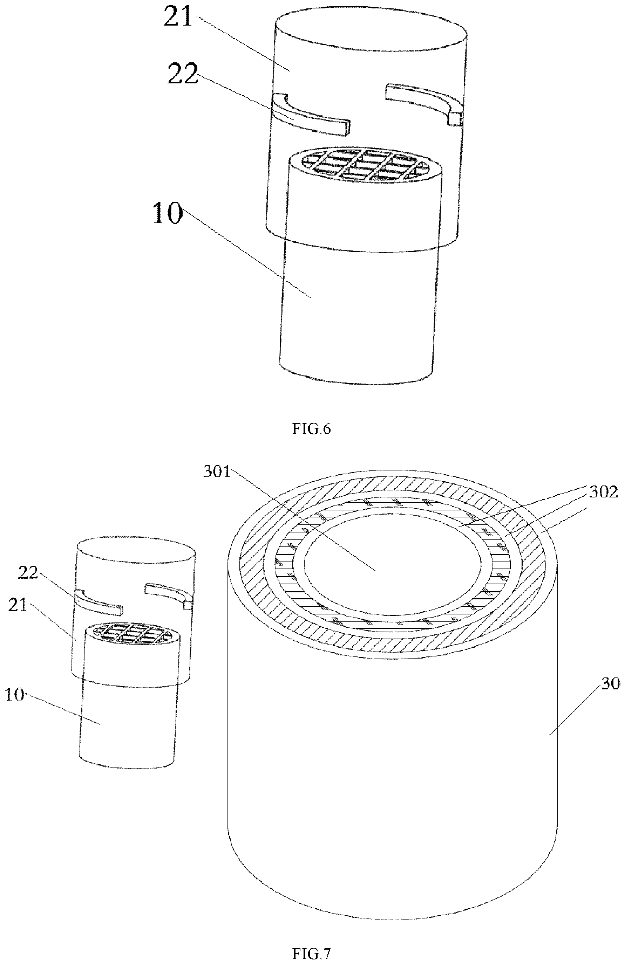

As shown in FIG. 6, the blocking piece 22 is arranged in a cavity defined by the preheating tube 21 to divide the cavity into a first cavity and a second cavity, wherein the first cavity is used for placing the part of the smoking product and preheating the smoking product, and the second cavity is used for placing at least one part of the ceramic heating element 10.

That is to say, the blocking piece 22 is arranged in the cavity defined by the preheating tube 21 to divide the cavity into two parts, one part is used for placing the part of the smoking product, and the other part is used for containing at least one part of the ceramic heating element 10.

Optionally, as shown in FIG. 1, FIG. 3 and FIG. 5, the blocking piece 22 can be a flow deflector located in the cavity along the wall of the preheating tube 21, and the flow deflector is provided with a plurality of deflector holes 202.

Further, as shown in FIG. 1 or FIG. 3, the plurality of deflector holes 202 are evenly distributed in the peripheral direction.

Specifically, in an example, as shown in FIG. 1 or FIG. 3, the deflector holes 202 are round holes with the hole diameter of 0. 1-2mm.

In this way, when the ceramic heating element 10 performs heating work, the flow deflector separates the ceramic heating element 10 from the smoking product, which can effectively prevent the ceramic heating element 10 from being in direct contact with the smoking product or being too close to the smoking product to further prevent the part of the smoking product close the ceramic heating element from being heated to be over 320°C and burnt. Further, when a user smokes the smoking product, the hot air can flow into the first cavity quickly through hot air through holes, that is, the deflector holes 202 to bake the smoking product evenly and quickly.

Optionally, in another embodiment, as shown in FIG. 6, the blocking piece 22 forms a step surface extending along the wall of the preheating tube 21 to the center.

Specifically, as shown in FIG. 6, two blocking pieces 22 can be provided, and the two blocking pieces 22 are arranged oppositely to separate the ceramic heating element 10 from the smoking product in the cavity effectively and further effectively prevent the ceramic heating element 10 from being in direct contact with the smoking product or being too close to the smoking product to further prevent the part of the smoking product close to the ceramic heating element from being heated to be over 320°C and burnt. Further, when the user smokes the smoking product, the hot air can flow quickly through the gap between the two blocking pieces to bake the smoking product evenly and quickly.

Optionally, in an embodiment, the preheating tube 21 can be the ceramic tube, wherein the ceramic tube is made of the aluminum oxide ceramics, the aluminum nitride ceramics, the silicon nitride ceramics, the silicon carbide ceramics, the beryllium oxide ceramics or the zirconium oxide ceramics.

Optionally, the flow deflector can also be made of the aluminum oxide ceramics, the aluminum nitride ceramics, the silicon nitride ceramics, the silicon carbide ceramics, the beryllium oxide ceramics or the zirconium oxide ceramics.

Further, the aluminum oxide content in the aluminum oxide ceramics is greater than 99%, and the density of the aluminum oxide ceramics is not less than 3.86g/cm³.

In this way, when the ceramic heating element 10 performs heating work, because the flow deflector and the ceramic tube are both made of the high-purity aluminum oxide ceramics which can be quickly heated to achieve the effect of preheating the cavity, the heating efficiency can be improved, and even quick baking of the smoking product can be facilitated.

Further, in the embodiment of the present invention, the purity of the aluminum oxide ceramics is greater than 99%, so that the ceramic surface has very high compactness, adsorption of the smoke particles can be effectively prevented, and the effect of preventing peculiar smell can be achieved. Further, the aluminum oxide ceramics have good thermal conductivity, up to 33W/MK, so that the heating efficiency is high, and air temperature rise in the cavity can be achieved more quickly.

Meanwhile, the aluminum oxide ceramic tube 21 does not serve as a heating component, which can reduce the heat loss. In addition, on one hand, the hot air through holes adopted can facilitate circulation of hot air; on the other hand, it also prevents direct diffusion of the hot air when there is no smoking action. The heat insulation effect is achieved.

Optionally, in an embodiment, the wall thickness of the ceramic tube achieving the preheating effect is 0.1-0.8mm. Due to the fact that the wall thickness of the ceramic tube is small, when the ceramic heating element 10 performs heating work, the heat can be transmitted on the ceramic tube easily, and quick preheating can be achieved.

In order to achieve quick preheating of the ceramic tube and improve the preheating effect, optionally, in another embodiment, the heating circuit can be printed on the outer surface of the ceramic tube in the thick film circuit mode; and when the ceramic heating element 10 performs heating work, the ceramic tube with the heating circuit performs heating work simultaneously to achieve the cavity preheating effect.

According to the non-contact heat not burn heating device of the embodiment of the present invention, the ceramic heating element is matched with the smoking product bearing assembly, at least one part of the ceramic heating element is arranged in the cavity defined by the preheating tube, which can achieve the effect of preheating the cavity, improves the heating efficiency and makes the heated flow air bake the smoking product evenly to avoid cut tobacco waste of the smoking product and improve the smoke volume. Meanwhile, due to the fact that the ceramic heating element adopts the high-purity aluminum oxide ceramics which have high compactness and almost have no pores in the micro structure, pollutants in fluids cannot enter the ceramic heating element and thus cannot leave pollution or peculiar smell on the surface. Further, because the smoking product bearing assembly separates the smoking product from the ceramic heating element completely, non-contact air heating is completely achieved to ensure that the product is not polluted. In addition, the ceramic heating element adopts the porous arrangement, so that the specific surface area of the honeycomb ceramic body is large enough to achieve sufficient heating of the air. Not only the heating efficiency is high, but also the ceramic heating body has high thermal conductivity, so that the aim of heating the air can be achieved more quickly. Further, the air flow speed is limited to some extent due to the structure of the porous channel, the contact time between the hot air and the smoking product is longer during baking of the smoking product, the heat loss is reduced, and the energy is saved. Moreover, when no smoking action is performed, the hot air can be locked by means of the porous shape of the ceramic heating body, which reduces outer flow of the hot air and further saves the energy. In addition, the smoking product placed in the cavity is separated from the ceramic heating element through the blocking piece, which prevents the ceramic heating element from being in direct contact with the smoking product or being too close to the smoking product to further prevent the part of the smoking product close to the ceramic heating element from being heated to be over 320°C and burnt. Further, due to the fact that the preheating tube has the preheating effect, and at least one part of the ceramic heating element is arranged in the cavity, the hot air heated by the ceramic heating element bakes the smoking product effectively, the baking efficiency is high, and the smoke volume is further improved.

Optionally, in an embodiment, as shown in FIG. 1 to FIG. 12, the smoking product bearing assembly 20 comprises a ceramic tube 21 and a blocking piece 22. Wherein the cavity defined by the ceramic tube 21 is suitable for placing at least a part of the smoking product, the blocking piece 22 is connected to the ceramic tube 21, and the blocking piece 22 is adjacent to the ceramic heating element 10 to limit the position of the smoking product.

Optionally, as shown FIG. 1, FIG. 3 and FIG. 10, the blocking piece 22 can be a flow deflector located on an opening at one end of the ceramic tube 21 and forming a cup body with the ceramic tube 21, and the flow deflector is provided with a plurality of deflector holes 202.

Further, as shown in FIG. 1 or FIG. 3, the plurality of deflector holes 202 are evenly distributed in the peripheral direction.

Specifically, in an example, as shown in FIG. 1 or FIG. 3, the deflector holes 202 are round holes with the hole diameter of 0. 1-2mm.

In this way, when the ceramic heating element 10 performs heating work, the flow deflector separates the ceramic heating element 10 from the smoking product, which can effectively prevent the ceramic heating element 10 from being in direct contact with the smoking product or being too close to the smoking product to further prevent the part of the smoking product close the ceramic heating element from being heated to be over 320°C and burnt. Further, when a user smokes the smoking product, the hot air can flow into the cavity quickly through hot air through holes, that is, the deflector holes 202 to bake the smoking product evenly and quickly.

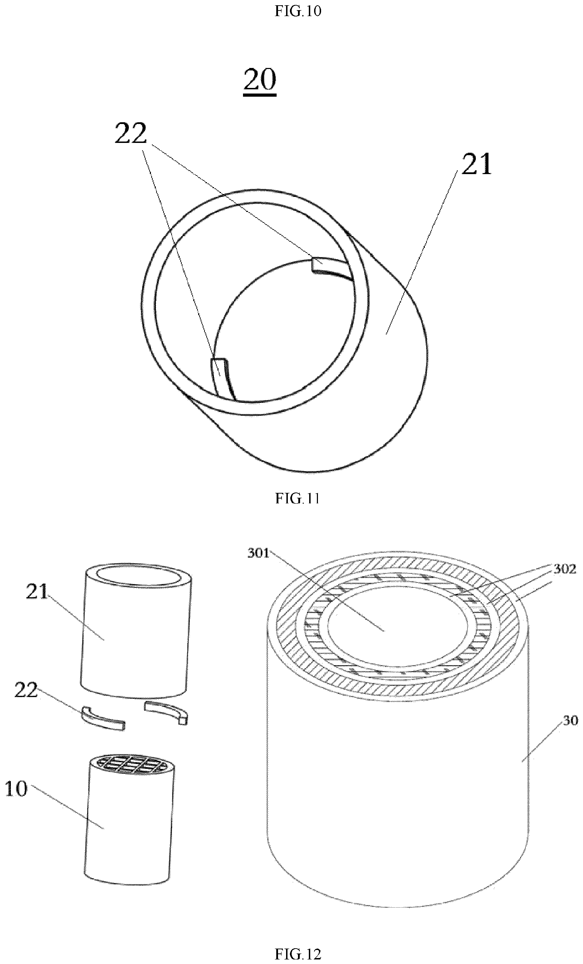

Optionally, in another embodiment, as shown in FIG. 11, the blocking piece 22 forms a step surface extending along the wall of the ceramic tube 21 to the center.

Specifically, as shown in FIG. 11, two blocking pieces 22 can be provided, and the two blocking pieces 22 are arranged oppositely to separate the ceramic heating element 10 from the smoking product effectively and further effectively prevent the ceramic heating element 10 from being in direct contact with the smoking product or being too close to the smoking product to further prevent the part of the smoking product close to the ceramic heating element from being heated to be over 320°C and burnt. Further, when the user smokes the smoking product, the hot air can flow into the cavity quickly through the gap between the two blocking pieces to bake the smoking product evenly and quickly.

According to the non-contact heat not burn heating device of the embodiment of the present invention, the ceramic heating element and the smoking product bearing assembly are separated in the sealing sleeve, so that the heated flow air can bake the smoking product evenly when the ceramic heating element heats the air, which avoids cut tobacco waste of the smoking product and improves the smoke volume. Meanwhile, due to the fact that the ceramic heating element adopts the high-purity aluminum oxide ceramics which have high compactness and almost have no pores in the micro structure, pollutants in fluids cannot enter the ceramic heating element and thus cannot leave pollution or peculiar smell on the surface. Further, because the smoking product bearing assembly separates the smoking product from the ceramic heating element completely, non-contact air heating is completely achieved to ensure that the product is not polluted. In addition, the ceramic heating element adopts the porous arrangement, so that the specific surface area of the honeycomb ceramic body is large enough to achieve sufficient heating of the air. Not only the heating efficiency is high, but also the ceramic heating body has high thermal conductivity, so that the aim of heating the air can be achieved more quickly. Further, the air flow speed is limited to some extent due to the structure of the porous channel, the contact time between the hot air and the smoking product is longer during baking of the smoking product, the heat loss is reduced, and the energy is saved. Moreover, when no smoking action is performed, the hot air can be locked by means of the porous shape of the ceramic heating body, which reduces outer flow of the hot air and further saves the energy. Furthermore, in the smoking product bearing assembly, the cavity defined by the ceramic tube is used for placing at least a part of the smoking product, and the blocking piece is used for separating the smoking product placed in the cavity from the ceramic heating element, which prevents the ceramic heating element from being in direct contact with the smoking product or being too close to the smoking product to further effectively prevent the part of the smoking product close to the ceramic heating element from being heated to be over 320°C and burnt. Further, when a user smokes the smoking product, the hot air flows into the cavity quickly to bake the smoking product evenly and quickly to ensure that the hot air heated by the ceramic heating element bakes the smoking product effectively, the baking efficiency is high, and the smoke volume is sufficient. Due to the fact that the ceramic tube has high surface compactness, adsorption of the smoke particles can be effectively prevented, and the effect of preventing peculiar smell can be achieved.

In the embodiment of the present invention, as shown in FIG. 7 to FIG. 9 and FIG. 12 to FIG. 16, a sealing sleeve 30 is arranged in the hollow mode to form a bearing cavity 301, the ceramic heating element 10 and the smoking product bearing assembly 20 are arranged in the bearing cavity 301, and the sealing sleeve 30 is made of bushings to reduce the heat transmission of the ceramic heating element 10 to the outside.

At least one sealing cavity is formed in the sealing sleeve in the bushing sleeve mode and can reduce heat transmission of the ceramic heating element to the outside to reduce the outer wall temperature of the device.

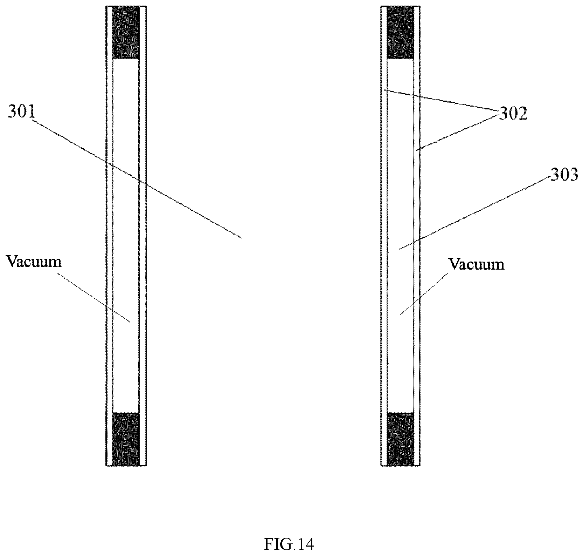

In an embodiment, as shown in FIG. 14, the sealing sleeve is made of vacuum bushings, the vacuum bushings are formed by sleeve connection of two layers of bushings, a sealing cavity is formed between the two layers of bushings in the sealing mode, and the sealing cavity adopts vacuum arrangement.

In the embodiment of the present invention, the sealing sleeve is made of the vacuum bushings, can reduce transmission of the heat produced by the ceramic heating element to the outside, achieve the heat insulation effect, effectively reduce the outer wall temperature of the device and greatly improve the user experience, is simple in structure and reduces cost.

That is, a hollow tube with the sealing cavity 303 is formed in the sealing sleeve 30 in the bushing sleeve connection mode, and the sealing cavity 303 is arranged in the vacuum mode, which can reduce heat transmission to the outer wall of the non-contact heat not burn heating device, greatly reduce the outer wall temperature and avoid affecting the user experience caused by too high outer wall temperature.

In this way, when the heat is transmitted out during heating of the ceramic heating element 10, the heat is first transmitted to an inner bushing of the vacuum bushings. Because the vacuum sealing cavity is formed between the inner bushing and an outer bushing, the heat is only transmitted on the wall and the contact portion, heat transmission to the outside is reduced, so that the vacuum sealing cavity can achieve a good heat insulation effect, which is favorable for heat insulation of the ceramic heating element and achieves the energy-saving effect.

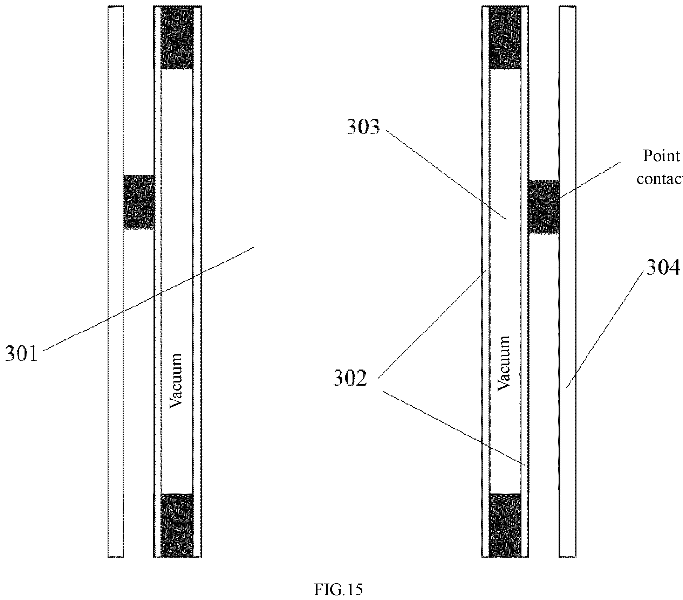

Optionally, according to an embodiment of the present invention, as shown in FIG. 15, the sealing sleeve 30 further comprises a radiating tube 304 arranged on the outside of the vacuum bushings in the sleeve mode, and the vacuum bushings and the radiating tube 304 are fixed in the point contact mode.

In this way, when the heat is transmitted out during heating of the ceramic heating element 10, the heat is first transmitted to an inner bushing of the vacuum bushings. Because the vacuum sealing cavity is formed between the inner bushing and an outer bushing, the heat is only transmitted on the wall and the contact portion, heat transmission to the outside is reduced, so that the vacuum sealing cavity can achieve a good heat insulation effect, which is favorable for heat insulation of the ceramic heating element and achieves the energy-saving effect. Meanwhile, the heat on the vacuum bushings can only be transmitted to the radiating tube 304 through a contact point and transmitted on the wall of the radiating tube 304, which avoids local excess temperature, dissipates the heat escaped from the vacuum bushings effectively, further reduces heat transmission to the outer wall of the non-contact heat not burn heating device, reduces the outer wall temperature and avoids affecting the user experience caused by too high outer wall temperature.

Optionally, in an embodiment of the present invention, as shown in FIG. 15, the vacuum bushings and the radiating tube 304 are in coaxial sleeve connection.

Wherein, the thermal conductivity of the material adopted by the vacuum bushings is less than that of the material adopted by the radiating tube. The vacuum bushings have lower thermal conductivity and can avoid heat dissipation to the outside to achieve the heat insulation effect, while the radiating tube has higher thermal conductivity and can achieve the rapid heat dissipation effect to avoid local excess temperature caused by heat accumulation at the point contact position, for example, the radiating tube can be made of the material with the thermal conductivity of over 30W/MK and can be a stainless steel tube, a ceramic tube, etc.

Optionally, in an embodiment, as shown in FIG. 7 to FIG. 9, the sealing sleeve 30 is arranged in the hollow mode to form the bearing cavity 301, the ceramic heating element 10 and the smoking product bearing assembly 20 are arranged in the bearing cavity 301, the sealing sleeve 30 is formed by adopting at least three bushings 302 in the sleeve connection mode to form at least two sealing cavities 303, wherein, at least one sealing cavity 303 is filled with a coolant, and at least one of the sealing cavities 303 filled with the coolant is far away from the bearing cavity 301.

The sealing sleeve is formed by adopting at least three bushings in the sleeve connection mode to form at least two sealing cavities, at least one sealing cavity is filled with the coolant, and at least one of the sealing cavities filled with the coolant is far away from the bearing cavity. By means of the heat storage and cooling effect of the coolant, the outer wall temperature of the device can be effectively reduced, and the user experience is greatly improved.

That is, a plurality of sealing cavities 303 are formed in the sealing sleeve 30 in the bushing sleeve connection mode, and at least a sealing cavity 303 close to the outside is filled with the coolant (like water). Due to the fact that the coolant (like water) has higher specific heat, it can be a better heat storage body, thus the heat of the ceramic heating element 10 transmitted to the outside can be effectively stored in the coolant (like water), which can reduce heat transmission to the outer wall of the non-contact heat not burn heating device, greatly reduce the outer wall temperature and avoid affecting the user experience caused by too high outer wall temperature.

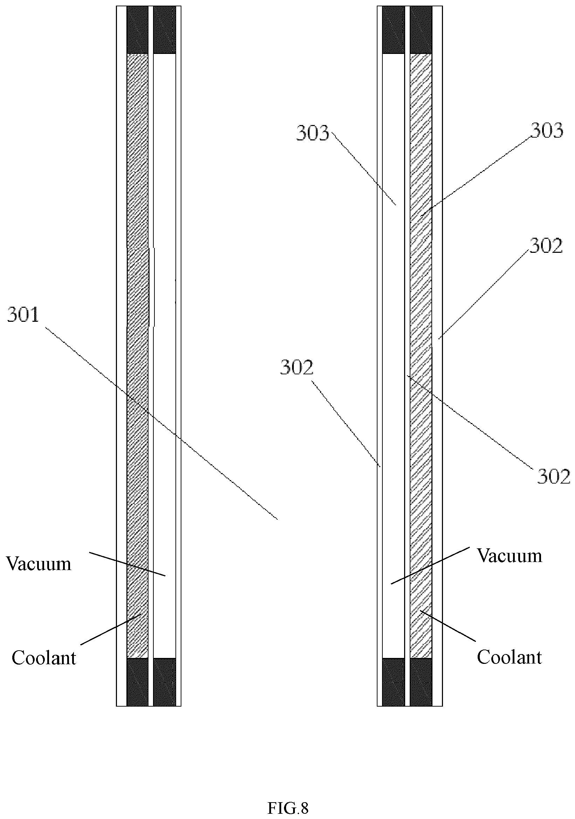

Optionally, in an embodiment, as shown in FIG. 8, two sealing cavities 303 are provided, a sealing cavity 303 of the two sealing cavities 303 close to the outside is filled with the coolant, and another sealing cavity 303 close to the inside is arranged in the vacuum mode.

That is, the sealing sleeve 30 is formed by mutual sleeve connection of three layers of bushings, the three bushings are sealed to form the two sealing cavities 303, wherein a sealing cavity between an inner bushing and a middle bushing are vacuumized to form a vacuum sealing cavity, and a sealing cavity between the middle bushing and an outer bushing is filled with the coolant (like water). In this way, when the heat is transmitted out during heating of the ceramic heating element 10, the heat is first transmitted to the inner bushing. Because the vacuum sealing cavity is formed between the inner bushing and the middle bushing, the heat is only transmitted on the wall and the contact portion, heat transmission to the outside is reduced, so that the vacuum sealing cavity can achieve a good heat insulation effect, which is favorable for heat insulation of the ceramic heating element and achieves the energy-saving effect. Meanwhile, due to the fact that the sealing cavity formed between the middle bushing and the outer bushing is filled with the coolant (like water), the heat of the middle bushing is led into the coolant (like water), while the water has high specific heat, the heat transmitted to the outside can be stored in the water, and the wall temperature of the outer bushing can be reduced.

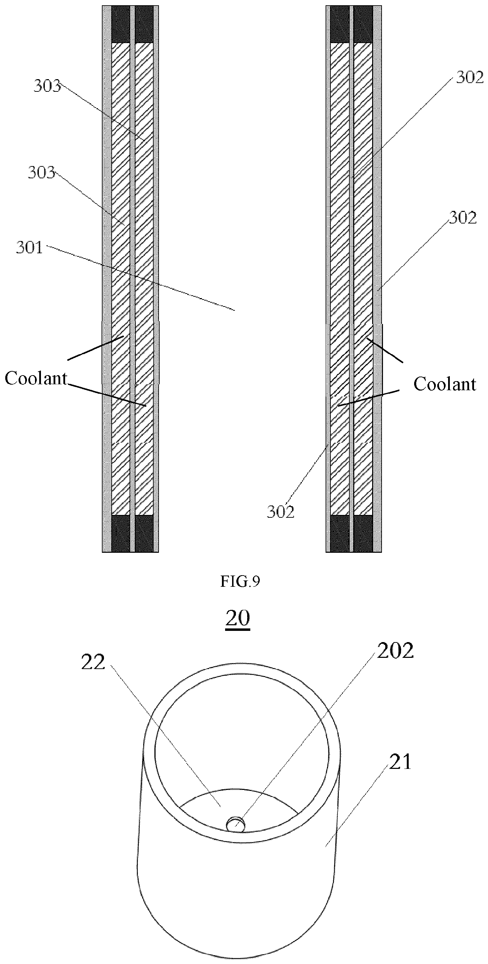

Optionally, in another embodiment, as shown in FIG. 9, two sealing cavities 303 are provided, and the two sealing cavities 303 are both filled with the coolant.

That is, the sealing sleeve 30 is formed by mutual sleeve connection of three layers of bushings, the three bushings are sealed to form the two sealing cavities 303, and the two sealing cavities 303 are filled with the coolant (like water). In this way, when the heat is transmitted out during heating of the ceramic heating element 10, the heat is first transmitted to the inner bushing and then transmitted to the contact portion and the coolant (like water) in the sealing cavity from the inner bushing. Due to the fact that the portion close to the heating body has higher water temperature, the middle bushing can achieve vertical transmission of the temperature, thereby achieving the effect of equalizing the water temperature and heat storage by water. Similarly, the sealing cavity between the middle bushing and the outer bushing is filled with the coolant (like water), and also achieves the effect of equalizing the water temperature and heat storage, so that the wall temperature of the outer bushing is uniform, and local overheating can be avoided. The local excess temperature is avoided while the wall temperature of the outer bushing is reduced.

It should be noted that, in other embodiments of the present invention, the sealing sleeve 30 can also be formed by mutual sleeve connection of four layers of bushings, and the four bushings are sealed to form three sealing cavities 303. Wherein, an outer sealing cavity of the three sealing cavities 303 is filled with the coolant (like water), an inner sealing cavity and a middle sealing cavity can both adopt the vacuum arrangement and can also be filled with the coolant (like water), or one can be filled with the coolant (like water) and the other adopts the vacuum arrangement.

Optionally, in an embodiment of the present invention, at least three bushings 302 are in coaxial sleeve connection.

Wherein, the bushings 302 can be made of the material with the thermal conductivity of over 30W/MK, for example, the bushings can be stainless steel bushings and ceramic bushings, etc.

Preferably, the coolant can be water. Understandably, in other embodiments of the present invention, the coolant can also be other liquids with high specific heat.

As shown in FIG. 1 to FIG. 4, the embodiment of the present invention further provides a non-contact air heating type heat not burn heating device which comprises a heating assembly 1, a sealing sleeve 30 and a heat recovery device 3, wherein the side wall of the heat recovery device 3 is internally provided with a first cellular porous channel 31, and the first cellular porous channel 31 divides the heat recovery device 3 into an outer wall 32 and an inner wall 33; the inner wall 33 of the heat recovery device 3 is provided with the sealing sleeve 30, the sealing sleeve 30 is internally provided with the heating assembly 1 in the sleeve mode, and the heating assembly 1 is connected to the heat recovery device 3 through the sealing sleeve 30; the heating assembly 1 is internally provided with a heating body 11; and the heating body 11 is provided with a heating circuit 12, the endpoints of the heating circuit 12 are provided with wires 13, and the heating body 11 is internally provided with a second cellular porous channel 101.

Further, the heating assembly 1 is provided with a preheating tube 21, a flow deflector 22 and a heating element 20 sequentially from top to bottom, wherein the flow deflector 22 is provided with a plurality of deflector holes 202.

Further, the heating assembly 1 and the heat recovery device 3 are both made of the high-purity aluminum oxide ceramics with the density not less than 3.86g/cm³.

Further, the first group of honeycomb porous channels 31 and the second group of honeycomb porous channels 101 are uniformly arranged square holes or other polygonal holes, with a pore diameter ranging from 0.1mm to 2 mm, and the minimum distance between two adjacent holes within 0. 1mm-0.5 mm

Further, printing materials of the heating circuit 12 comprise but not limited to silver, tungsten and MoMn (molybdenum manganese).

Further, materials of the wires 13 comprise but not limited to silver, copper and nickel.

In the embodiment, as shown in Figure 1, the side wall of the heat recovery device 3 is internally provided with the first cellular porous channel 31, and the first cellular porous channel 31 divides the heat recovery device 3 into the outer wall 32 and the inner wall 33; the inner wall 33 of the heat recovery device 3 is provided with the sealing sleeve 30, the sealing sleeve 30 is internally provided with the heating assembly 1 in the sleeve mode, and the heating assembly 1 is connected to the heat recovery device 3 through the sealing sleeve 30; and the heating assembly 1 is internally provided with the preheating tube 21, the flow deflector 22 and the heating body 11 sequentially from top to bottom, as shown in FIG. 2, the heating body 11 is provided with the heating circuit 12, the endpoints of the heating circuit 12 are provided with the wires 13, and the heating body 11 is internally provided with the second cellular porous channel 101. When needing to smoke, the user places the smoking product (like the cartridge) into the preheating tube 21 to prevent the cartridge from falling off, and the heating circuit 12 starts to heat after powered on. Only after the cartridge is baked at 280°C-320°C, the effective ingredients like the nicotine can be emitted, that is, the smoke for smoking can be produced, so the device needs to be preheated. The preheating is completed after the temperature of the preheating tube 21 and the flow deflector 22 reaches 200°C. Due to the fact that the preheating has completed, the cartridge only needs to be heated from 200°C to 320°C during the first and second smoking, that is, the first heating, more quickly than temperature increase from the room temperature, and the smoke volume and the first and second smoking can be further ensured. In order to achieve rapid heating, the heating body 11 is internally provided with the second cellular porous channel 101, and the porous channel is provided with the square holes or other polygonal holes evenly distributed with the hole diameter range of 0.1-2mm and the minimum distance between two adjacent holes of 0.1-0.5mm. The expansion area is large, so the air heating efficiency is very high. In addition, the hot air flows through the honeycomb center without contact with the heating circuit 12, and no pollution will be caused. Meanwhile, the heating assembly 1 and the heat recovery device 3 are both made of the high-purity aluminum oxide ceramics with good insulation, high strength and good thermal conductivity, therefore, the heating element 20 has no electric leakage during heating, and the preheating tube 21 and the flow deflector 22 can be rapidly heated due to good thermal conductivity of the high-purity aluminum oxide ceramics, and the user does not have to wait long to smoke the cartridge. When the user smokes the cartridge, the airflow is heated to 320°C through the heating element 20 and then passes through the deflector holes 202 in the flow deflector 22 to be further homogenized and shunted to flow into the cartridge more evenly to heat the cut tobacco to improve the smoke volume. In the heating process, all the heat not acting on the cartridge will be recovered. Due to the fact that the inner wall 33 of the heat recovery device 3 is provided with the sealing sleeve 30, and the sealing sleeve 30 is internally provided with the heating assembly 1 in the sleeve mode, the heat produced by the heating assembly 1 and not acting on the cartridge will be transferred to the first cellular porous channel 31. In addition, the porous channel is provided with the square holes or other polygonal holes evenly distributed with the hole diameter range of 0.1-2mm and the minimum distance between two adjacent holes of 0.1-0.5mm, the expansion area is large, so the heating efficiency is very high, the thermal insulation effect can be achieved, and the energy saving can be achieved by reducing the heating time. During the smoking process, the heated air flows to the second cellular porous channel 101, the air flows into the heat recovery device 3 to further take away the heat in the first cellular porous channel 31 to achieve heat recovery. The sealing sleeve 30 achieves the sealing effect between the heat recovery device 3 and the heating assembly 1, ensuring that the hot air does not flow to other places. During smoking, some fluid contaminants emitted from the cartridge may inevitably remain in the device. As the high-purity alumina ceramics feature high density (not less than 3.86g/cm³) and almost have no pores in microstructure, so penetration of contaminants in smoke is impossible, and no pollution and odd smell will be left on the surface;

In the description of the present invention, it should be understood that orientation or position relationships indicated by terms "center", "longitudinal", "transverse", "length", "width", "thickness", "upper", "lower", "front", "rear", "left", "right", "vertical", "horizontal", "top", "bottom", "inner", "outer", "clockwise", "counterclockwise" etc. are orientation or position relationships as shown in the drawings, and these terms are just utilized to facilitate description of the present invention and simplify the description, but not to indicate or imply that the mentioned device or component must have a specific orientation and must be established and operated in a specific orientation, and thus, these terms cannot be understood as a limitation to the present invention.

In addition, the terms "first" and "second" are used only for the purpose of description and are not intended to indicate or imply relative importance or imply the number of technical characteristics indicated. Thus, a characteristic defined by "first" and "second" can comprise one or a plurality of characteristics explicitly or implicitly. In the description of the present invention, "a plurality of' means two or more, unless otherwise expressly and specifically defined.

In the present invention, unless otherwise specified and defined, the terms "installed", "connected", "connected with" and "fixed" should be comprehended in a broad sense. For example, these terms may be comprehended as being fixedly connected, detachably connected or integrally connected; mechanically connected or electrically connected; directly connected or indirectly connected through an intermediate medium, and in an internal communication between two components or in an interactive relationship between two components. A person of ordinary skill in the art may understand specific meanings of the foregoing terms in the present invention according to specific situations.

In the present invention, unless otherwise specified and defined, the expression that a first characteristic is "above" or "below" a second characteristic may include that the first characteristic and the second characteristic are in direct contact and may also include that the first characteristic and the second characteristic are not in direct contact but in contact through an additional characteristic between them. Furthermore, the expression that the first characteristic is "over", "above" and "on" the second characteristic includes that the first characteristic is right above or at the inclined top of the second characteristic, or just means that the level of the first characteristic is higher than that of the second characteristic. The expression that the first characteristic is "under", "below" and "beneath" the second characteristic includes that the first characteristic is under or at the inclined bottom of the second characteristic, or just means that the level of the first characteristic is lower than that of the second characteristic.

In the description of the specification, description of the reference terms "an embodiment", "some embodiments", "example", "specific example" or "some examples" means that specific characteristics, structures, materials or features described in combination with the embodiment or the example are included in at least one embodiment or example of the present invention. In the specification, indicative expression of the above terms should not be understood as being necessarily specific to the same embodiment or example. Furthermore, the specific characteristics, the structures, the materials or the features described may be combined in the appropriate mode in any one or more embodiments or examples. In addition, those skilled in the art may connect and combine different embodiments or examples described in the specification.

Although the embodiments of the present invention have been shown and described above, it can be understood that the embodiments are exemplary but should not be construed as a limitation on the present invention, the ordinary technician skilled in the art may make changes, modifications, substitutions and variations of the embodiments within the scope of the present invention.

## Claims

1. A non-contact heat not burn heating device, comprising a ceramic heating element, a smoking product bearing assembly and a sealing sleeve, wherein,
the ceramic heating element comprises a heating body and a heating circuit, the heating body is cylindrical and internally provided with a porous channel, and the heating circuit is arranged on the heating body to heat air passing through the porous channel;
the smoking product bearing assembly comprises a preheating tube and a blocking piece, the blocking piece is arranged in a cavity defined by the preheating tube to divide the cavity into a first cavity and a second cavity, the first cavity is used for placing the part of a smoking product, and the second cavity is used for placing at least one part of the ceramic heating element; and
the sealing sleeve is arranged in the hollow mode to form a bearing cavity, the ceramic heating element and the smoking product bearing assembly are arranged in the bearing cavity, and the sealing sleeve is made of bushings to reduce the heat transmission of the ceramic heating element to the outside.

2. The non-contact heat not burn heating device according to claim 1, wherein the sealing sleeve is made of vacuum bushings, the vacuum bushings are formed by sleeve connection of two layers of bushings, a sealing cavity is formed between the two layers of bushings in the sealing mode, and the sealing cavity adopts vacuum arrangement.

3. The non-contact heat not burn heating device according to claim 2, wherein the sealing sleeve further comprises a radiating tube arranged on the outside of the vacuum bushings in the sleeve mode, and the vacuum bushings and the radiating tube are fixed in the point contact mode.

4. The non-contact heat not burn heating device according to claim 1, wherein the sealing sleeve is formed by adopting at least three bushings in the sleeve connection mode to form at least two sealing cavities, wherein, at least one sealing cavity is filled with a coolant, and at least one of the sealing cavities filled with the coolant is far away from the bearing cavity.

5. The non-contact heat not burn heating device according to claim 4, wherein the two sealing cavities are provided, among the two sealing cavities, one sealing cavity close to the outside is filled with the coolant, and the other sealing cavity close to the inside is arranged in the vacuum mode.

6. The non-contact heat not burn heating device according to claim 4, wherein the two sealing cavities are provided, and the two sealing cavities are both filled with the coolant.

7. The non-contact heat not burn heating device according to any one of claim 1 to 6, wherein the blocking piece is a flow deflector located in the cavity along the wall of the preheating tube, and the flow deflector is provided with a plurality of deflector holes.

8. The non-contact heat not burn heating device according to any one of claims 1 to 6, wherein the blocking piece forms a step surface extending along the wall of the preheating tube to the center.

9. A non-contact heat not burn heating device, comprising:
a ceramic heating element, wherein the ceramic heating element comprises a heating body and a heating circuit, the heating body is cylindrical and internally provided with a porous channel, and the heating circuit is arranged on the heating body to heat air passing through the porous channel;
a smoking product bearing assembly, wherein the smoking product bearing assembly comprises a ceramic tube and a blocking piece, a cavity defined by the ceramic tube is suitable for placing at least a part of a smoking product, and the blocking piece is connected to the ceramic tube and adjacent to the ceramic heating element to limit the position of the smoking product; and
a sealing sleeve, wherein the sealing sleeve is arranged in the hollow mode to form a bearing cavity, the ceramic heating element and the smoking product bearing assembly are arranged in the bearing cavity, and the sealing sleeve is made of bushings to reduce the heat transmission of the ceramic heating element to the outside.

10. The non-contact heat not burn heating device according to claim 9, wherein the blocking piece is a flow deflector located on an opening at one end of the ceramic tube and forming a cup body with the ceramic tube, and the flow deflector is provided with a plurality of deflector holes.

11. The non-contact heat not burn heating device according to claim 9, wherein the blocking piece forms a step surface extending along the wall of the ceramic tube to the center.

12. The non-contact heat not burn heating device according to any one of claims 9 to 11, wherein the sealing sleeve is made of vacuum bushings, the vacuum bushings are formed by sleeve connection of two layers of bushings, a sealing cavity is formed between the two layers of bushings in the sealing mode, and the sealing cavity adopts vacuum arrangement.

13. The non-contact heat not burn heating device according to claim 12, wherein the sealing sleeve further comprises a radiating tube arranged on the outside of the vacuum bushings in the sleeve mode, and the vacuum bushings and the radiating tube are fixed in the point contact mode.

14. The non-contact heat not burn heating device according to any one of claims 9 to 11, wherein the sealing sleeve is formed by adopting at least three bushings in the sleeve connection mode to form at least two sealing cavities, wherein, at least one sealing cavity is filled with a coolant, and at least one of the sealing cavities filled with the coolant is far away from the bearing cavity.

15. The non-contact heat not burn heating device according to claim 14, wherein the two sealing cavities are provided, among the two sealing cavities, one sealing cavity close to the outside is filled with the coolant, and the other sealing cavity close to the inside is arranged in the vacuum mode.

16. The non-contact heat not burn heating device according to claim 14, wherein the two sealing cavities are provided, and the two sealing cavities are both filled with the coolant.
